# FASCICULE DE BREVET EUROPEEN

(11) **EP 0 652 656 B1**
(45) Date de publication et mention de la délivrance du brevet: **12.09.2001**
(21) Numéro de dépôt: 94402509.7
(22) Date de dépôt: 07.11.1994
(51) Int. Cl.: H04J 3/06

(54) **Procédé et dispositif de recherche d'un groupement caractéristique de données périodiquement inséré dans un flot**
Verfahren und Vorrichtung zum Suchen bestimmter regelmässig in einen Datenstrom eingefügter Datengruppen
Method and device for searching special data groups periodically inserted in a data flow

(30) Priorité: 09.11.1993 FR 9313344
(43) Date de publication de la demande: 10.05.1995
(73) Titulaire: ALCATEL, 75008 Paris (FR)
(72) Inventeur: Pinier, Francois, F-67100 Strasbourg (FR); Schmitt, Claude, F-67400 Illkirch (FR)
(74) Mandataire: Schaub, Bernard

(56) Documents cités:
- EP-A- 0 171 789
- EP-A- 0 456 974
- DE-A- 3 623 910
- IBM TECHNICAL DISCLOSURE BULLETIN, vol.31, no.7, 1 Décembre 1988, NEW YORK US pages 161 - 176, XP51441 NOMEN NESCIO 'Generalized framing algorithm for american (T1) and european (CEPT) primary layer 1 frame structures.'
- ELECTRONICS LETTERS., vol.9, no.4, 22 Février 1973, STEVENAGE GB pages 73 - 75 P. TOLSTRUP NIELSEN 'Distributed frame synchronisation by nonlinear-shift-register sequences.'

## Description

L'invention concerne un procédé et un dispositif de recherche d'un groupement caractéristique de données périodiquement inséré entre d'autres données dans un flot de données numériques.

Dans le domaine des communications réalisées sous forme numérique, il est bien connu d'identifier des éléments essentiels relatifs aux communications par des groupements caractéristiques de données numériques conformés chacun d'une manière différente spécifiquement identifiable.

Les données constituant de tels groupements ont des valeurs binaires fixées et se trouvent dans des positions déterminées à l'avance les unes par rapport aux autres.

Ainsi, par exemple, il est connu d'utiliser, un groupement identificateur spécifique, couramment dénommé motif d'alignement de trame, qui est périodiquement émis pour permettre de synchroniser la partie réception d'un système de transmission numérique d'informations par rapport à la partie émission. Ceci est notamment prévu, lorsque les diverses informations présentées sous forme numérique, qui sont à transmettre par une liaison, sont émises multiplexées dans le temps sur cette liaison par la partie émission, et qu'en conséquence, il est indispensable de pouvoir identifier, à la réception, les différents canaux temporels ayant servi à la transmission pour démultiplexer les informations qui sont réparties dans des trames successives et qui parviennent par ces divers canaux.

Le document DE-A-3623910 divulgue un procédé et un dispositif permettant d'obtenir ce résultat.

Il existe aussi d'autres dispositifs logiciels ou matériels permettant de rechercher, par scrutation systématique bit par bit, un groupement caractéristique de données incorporé dans un flot numérique reçu, lorsque ce groupement forme un motif simplement structuré, et par exemple lorsqu'il est constitué d'un petit nombre de bits de valeurs respectives fixées qui sont placés l'une derrière l'autre.

Lorsqu'un tel motif simple est introduit avec des conditions de périodicité données dans un flot de données transmis, il est connu de verrouiller le dispositif chargé de sa recherche sur le premier motif découvert pour essayer de trouver le motif identique suivant en prenant en compte les règles de récurrence choisies pour ce type de motif. Le verrouillage est maintenu si et tant que le dispositif de recherche considéré retrouve un motif identique dans les conditions prévues par les règles de récurrence évoquées ci-dessus.

Par contre s'il y a eu verrouillage erroné sur une imitation inattendue du motif, le dispositif de recherche est fourvoyé et il sera plus ou moins rapidement amené à reprendre la recherche à son début. Ceci est susceptible de conduire à des délais inacceptables, si les terminaux de communication concernés servent à véhiculer des informations se traduisant par des volumes élevés de données dont la transmission implique une exploitation exhaustive des possibilités offertes par les supports mis en oeuvre.

En effet en ce cas, un groupement caractéristique de données est alors susceptible d'être composé de données largement espacées les unes des autres, avec toutefois des espacements relatifs parfaitement déterminés.

Dans de telles conditions, les inconvénients liés aux recherches de type bit par bit deviennent rédhibitoires.

Ceci risquerait de se produire, par exemple, avec les terminaux visiophoniques prévus pour être raccordés à un réseau numérique à intégration de services (RNIS). En effet, chacun de ces terminaux visiophoniques, doit trouver un premier motif d'alignement de trame, à l'aide du dispositif de recherche qu'il comporte, dans le flot de données qu'il reçoit par la liaison numérique servant à son raccordement, pour pouvoir commencer à communiquer, lors de l'établissement d'une communication visiophonique.

Auparavant, il n'a en effet pas la possibilité d'afficher une image sur l'écran dont il est muni et seule une communication par voie audio est possible.

L'invention propose donc un procédé et un dispositif permettant d'effectuer une recherche rapide et sûre d'un groupement caractéristique de données numériques périodiquement inséré dans un flot transmis au rythme d'une horloge déterminée.

Selon une caractéristique de l'invention ce procédé comporte les étapes suivantes:
- stockage modulaire et temporaire d'un volume de données successivement reçues correspondant au sous-ensemble minimal dans lequel existe nécessairement au moins une partie caractéristique du groupement recherché;
- recherche initiale, par comparaison, d'un élément de référence correspondant au moins à ladite partie caractéristique de groupement, dans un des modules spécifiquement sélectionné en tant que zone de recherche privilégiée du sous-ensemble stocké et poursuite de la recherche, module après module dans le sous-ensemble, jusqu'au repérage d'au moins un groupe de données identique à l'élément de référence dans un des modules de ce sous-ensemble temporairement stocké;
- mémorisation de la position de tout groupe de données trouvé identique à l'élément de référence dans le premier module du sous-ensemble stocké où un tel groupe a été repéré;
- recherche comparative, confirmative de la persistance d'un groupe de données identique à l'élément de référence d'un sous-ensemble au suivant, pour toute position de groupe mémorisée d'un module, dans le module de même rang du sous-ensemble stocké suivant;
- maintien de la mémorisation pour toute position de groupe mise en mémoire qui est identiquement retrouvée dans le module de même rang du sous-ensemble stocké suivant;
- choix, en tant que position réelle de référence, de la position du groupe, identique à l'élément de référence, qui reste seule mémorisée dans un module d'un sous-ensemble stocké.

L'invention propose aussi un dispositif de recherche pour la mise en oeuvre du procédé évoqué ci-dessus, ce dispositif comportant :
- des moyens de mémorisation de sous-ensemble permettant le stockage temporaire par modules d'un volume de données successivement reçues correspondant au volume minimal dans lequel existe nécessairement au moins un élément de référence de groupement,
- de moyens de comparaison pour détecter tout groupe de données identique à l'élément de référence,
- des moyens de détermination de la position de tout groupe trouvé identique à l'élément de référence, dans un module de sous-ensemble. Selon une caractéristique de l'invention, ce dispositif dispose également :

- de moyens de mémorisation pour enregistrer la position de tout groupe trouvé identique à l'élément de référence dans un module de sous-ensemble, ces moyens de mémorisation de position coopérant avec les moyens précédemment cités pour que soit vérifiée la persistance de la présence d'un groupe identique à l'élément de référence en même position, dans au moins le sous-ensemble stocké suivant un premier sous-ensemble temporairement stocké, et pour signaler, comme position réelle de référence, la position du groupe, identique à l'élément de référence, qui reste seule mémorisée pour un module, suite à une recherche initiale effectuée pour un sous-ensemble et au moins une recherche confirmative réalisée pour le sous-ensemble suivant.

L'invention, ses caractéristiques et ses avantages sont précisés dans la description qui suit en liaison avec les figures évoquées ci-dessous.

La figure 1 présente un schéma de principe d'un exemple d'application impliquant l'usage d'un dispositif de recherche de motif.

La figure 2 présente un diagramme montrant les étapes successives de recherche d'un groupement caractéristique de données dans un flot.

La figure 3 présente un exemple de distribution des données dans une trame de période "T" composée d'une pluralité de trames élémentaires.

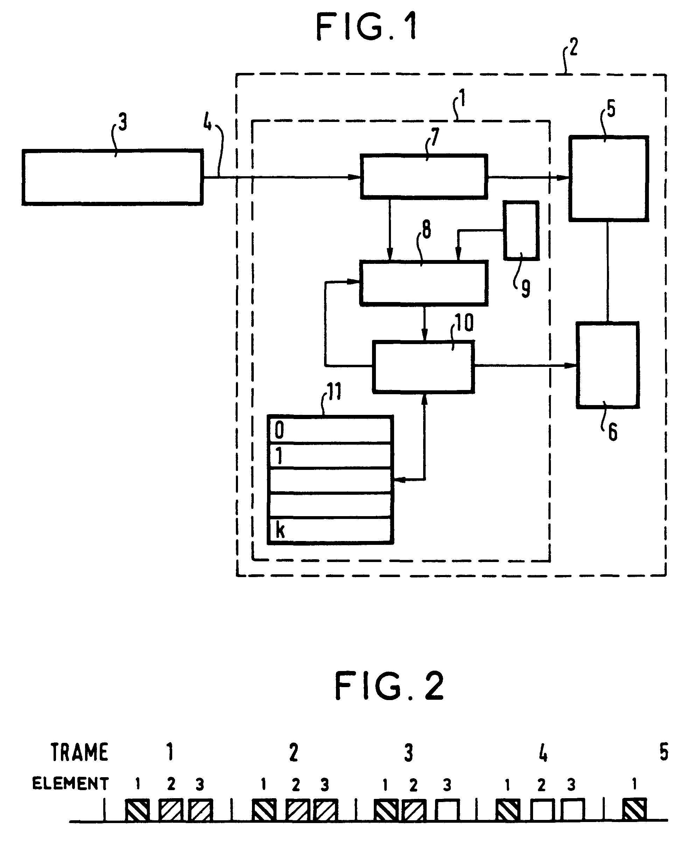

Le dispositif de recherche 1 présenté en figure 1 est supposé destiné à équiper un terminal de communication 2 relié à un réseau de communication 3 par une liaison numérique bidirectionnelle 4. Le terminal 2 qui comporte une interface homme-machine non représentée, est supposé doté d'un ensemble 5 pour le traitement des informations qu'il reçoit et émet et d'une logique de commande 6, comme il est usuel en ce domaine, c'est par exemple un terminal visiophonique d'abonné.

Le réseau est par exemple un réseau numérique à intégration de services auquel le terminal de communication 2 est raccordé par exemple au niveau d'une interface normalisée de type S. Le terminal 2 exploite alors au moins deux canaux de transmission voix-données B et un canal de données D normalisés pour ses communications dans chacun des deux sens de transmission via la liaison 4.

Le dispositif de recherche 1 est chargé de détecter la présence d'un groupement caractéristique de données numériques placé parmi d'autres données dans un flot où ce groupement caractéristique est périodiquement inséré. A cet effet, le dispositif de recherche est susceptible de disposer de moyens 7 permettant de conserver temporairement une partie d'un flot de données.

Dans l'exemple d'application évoqué ci-dessus, le groupement caractéristique recherché est par exemple un motif d'alignement de trame, tel qu'évoqué plus haut, qui est ici référencé FAW.

Lorsqu'une structure de trame temporelle, par exemple de type H221 telle que normalisée par le C.C.I.T.T. est envisagée pour les communications entre terminal 2 et réseau 3, il est prévu que le motif FAW soit constitué par un groupement de huit bits, de valeurs respectives 00110111, temporellement distribués d'une manière caractéristique dans un sous-canal dit de service par l'intermédiaire duquel des données sont transmises par la liaison 4 vers le terminal 2.

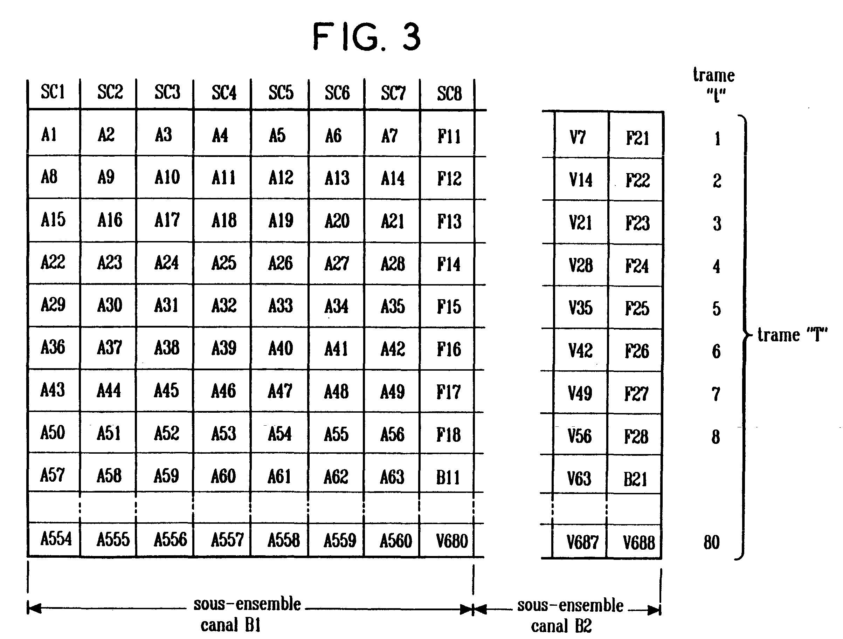

Une première partie caractéristique majeure du motif FAW est composée de sept bits qui sont transmis au cours d'une trame ici référencée "T", alors que le huitième bit est prévu transmis au cours de la trame "T" suivante. Comme il est connu et ainsi qu'il est montré en figure 3, chaque trame "T", de type H221, dont la période est de dix millisecondes, se subdivise en quatre-vingts trames élémentaires, de période "t" égale à 125 microsecondes. Le sous-canal de service, où doivent se trouver les bits de motif, est composé de temps de bit de même rang au cours des trames élémentaires successives, divers sous-canaux et notamment huit sous-canaux référencés SC1 à SC8 étant représentés en figure 3.

Dans l'exemple proposé les sept premiers bits de la partie caractéristique majeure de chaque motif FAW sont temporellement positionnés chacun au même rang "r" au cours de sept trames élémentaires successives en début d'une première trame "T". Le huitième bit du même motif à même rang "r" dans la trame élémentaire qui le contient que les sept autres bits de ce motif dans leurs trames élémentaires respectives mais il est placé dans une trame élémentaire de rang "R" de la trame "T" suivante.

Si un même motif est transmis dans plusieurs des canaux de transmission de données desservant un terminal, il est bien entendu possible d'effectuer la recherche par canal et par conséquent de scinder les données à prendre en compte en sous-ensembles censés correspondre chacun à un canal différent de transmission de données.

Dans le cas d'un terminal visiophonique 2, pour réseau RNIS, disposant d'un accès à deux canaux B et un canal D normalisés, le motif FAW est prévu transmis au terminal 2 au travers de la liaison 4 par l'intermédiaire de chacun des canaux B et il suffit donc de considérer deux sous-ensembles obtenus à partir des données transmises au cours d'un intervalle de temps "I" correspondant à deux trames "T" prises en succession. Chacun de ces deux sous-ensembles est ici obtenu en sélectionnant les données reçues qui sont susceptibles de provenir d'un même canal de transmission, au cours d'un même intervalle I, en raison de leurs positions temporelles respectives.

Dans l'exemple considéré, les données reçues considérées comme susceptibles de provenir d'un même canal de transmission et d'être prises en compte dans un même sous-ensemble sont notamment celles qui peuvent être assemblées par groupes de huit données immédiatement successives avec une périodicité de groupe égale à celle des trames élémentaires, d'une part, à partir de la première donnée reçue pour l'intervalle "I" considéré et pour un premier canal de transmission supposé, d'autre part, à partir de la neuvième donnée reçue pour ce même intervalle "I" et pour un second canal de transmission supposé, ces deux canaux étant référencés B1 et B2, sur la figure 3.

Tant dans l'exemple évoqué ci-dessus que de manière générale, il est possible de définir un sous-ensemble correspondant au volume de données minimal dans lequel existe nécessairement un groupement caractéristique tel que recherché, à partir du moment où ce groupement caractéristique est périodiquement distribué.

Si, comme dans l'exemple choisi, il est de plus prévu qu'un groupement caractéristique, tel que défini ci-dessus, soit positionné de manière caractéristique dans un sous-ensemble qui le comporte, il est logique de le rechercher au niveau de positionnement où il devrait normalement se trouver.

Il est alors possible de définir une première zone, privilégiée, où une première étape de recherche sera lancée dans le sous-ensemble où une recherche d'un groupement caractéristique doit être effectuée.

Dans le cas de l'exemple envisagé plus haut, il est donc prévu une première zone privilégiée de recherche de motif FAW qui correspond à un des modules subdivisant le sous-ensemble, ce module étant sélectionné en ce qu'il est supposé comporter toutes les données parvenues par un sous-canal de service inclus dans l'un des canaux de transmission B1, B2 du terminal 2 au cours d'un intervalle de temps "I" pris comme base de référence.

Comme indiqué plus haut, dans l'exemple proposé, le sous-canal de service à prendre en compte doit être celui qui est défini par les bits de rang huit au cours des trames élémentaires successives, il est ici supposé référencé SC8 sur la figure 3.

La première zone de recherche qui est prise en compte relativement à un intervalle de temps "I" comporte cent soixante données binaires successivement sélectionnées avec une périodicité égale à celle des trames élémentaires, à partir de la huitième donnée reçue pour l'intervalle I considéré.

D'une manière générale, le dispositif de recherche 1 comporte des moyens de comparaison 8, logiciels ou matériels, lui permettant d'identifier de manière connue en soi dans une zone de recherche, ici dans un module de sous-ensemble, l'élément de référence qui correspond au groupement caractéristique à retrouver, ce groupement étant ici supposé enregistré au niveau de moyens de mémoire 9.

Dans l'exemple envisagé plus haut, pour des raisons de commodité liées à la structure temporelle du motif FAW répartie sur deux trames, c'est une partie caractéristique du groupement, constituée par les sept premiers des huit bits 00110111 qui sert d'élément de référence initialement pris en compte lors des recherches.

D'une manière également générale, le dispositif de recherche 1 comporte aussi des moyens de repérage de position 10 par automate associés à des moyens de mémorisation 11, respectivement pour déterminer la position des groupes de données, qui sont identiques à l'élément de référence, dans une zone de recherche et pour conserver temporairement les coordonnées définissant les positions de ces groupes dans cette zone.

Dans la mesure où une zone de recherche correspond à une suite de données reçues dont les positions sont définies dans un intervalle de temps "I" choisi par rapport au début de cet intervalle, il est donc possible de mémoriser de manière connue en soi les positions des groups reconnus comme identiques à l'élément de référence recherché, par les positions temporelles des données composant chacun d'entre eux ou par des moyens équivalents.

Ainsi, à titre d'exemple, il est supposé que trois groupes identiques à l'élément de référence ont été repérés pour la trame "T" référencée 1 sur la figure 2.

Dans le schéma présenté en figure 1, les moyens de mémorisation 11 sont symbolisés par une mémoire apte à stocker "k" éléments permettant chacun de conserver les coordonnées par lesquelles est définie la position d'un groupe reconnu comme identique à l'élément de référence choisi.

Si, à l'occasion d'une première étape de recherche relative à des données reçues au cours d'un premier intervalle "I", aucun groupe identique à l'élément de référence recherché n'est trouvé dans la première zone de recherche examinée, une seconde étape de recherche de même nature que la première étape est déclenchée par l'automate 10 sur une seconde zone de recherche qui est constituée par un autre module du sous-ensemble dans lequel le module correspondant à la première zone est inclus.

Dans l'exemple envisagé, cette seconde zone de recherche est supposée être un module, du sous-ensemble précédemment pris en compte, qui correspond au sous-canal SC7 voisin du sous-canal SC8, initialement supposé de service, qui a précédemment été considéré. Le module correspondant à ce sous-sous-ensemble que constitue le sous-canal SC7 regroupe les cent soixante données binaires qui ont été successivement sélectionnées avec une périodicité égale à celle des trames élémentaires à partir du septième bit reçu au cours du premier intervalle "I" précédemment considéré.

Si, aucun groupe identique à l'élément de référence recherché n'est: trouvé par l'automate 10 dans une zone de recherche examinée, une nouvelle étape de recherche de même nature que les précédentes est déclenchée sur une nouvelle zone de recherche constituée par un nouvel autre module du sous-ensemble contenant les précédentes zones de recherche examinées sans résultat positif.

L'absence de résultat positif pour des recherches couvrant la totalité des modules d'un même sous-ensemble constitue une situation exigeant un traitement particulier par la logique de commande du terminal 2 comportant le dispositif de recherche 1, ce traitement accessoire, initié par l'automate 10, n'étant pas détaillé ici.

Dès qu'au moins un groupe, identique à l'élément de référence recherché, a été repéré et a eu sa position enregistrée, au cours d'une étape de recherche, dans la suite de données d'un module pris comme zone de recherche relative à des données d'un premier intervalle "I", l'automate 10 du dispositif de recherche est chargé de vérifier les résultats obtenus en effectuant une recherche, ici dite confirmative, dans des conditions analogues au niveau d'un second intervalle "I" succédant immédiatement au premier intervalle "I" considéré.

Cette recherche confirmative de persistance est supposée effectuée au cours d'une trame "T" référencée 2 sur la figure 2, elle est effectuée pour une zone de recherche qui correspond, pour les données prises en compte au cours du second intervalle "I", à celle prise en compte avec succès pour l'intervalle "I" précédent.

Ainsi, dans le cas de l'exemple déjà envisagé, si la zone de recherche explorée avec succès au cours du premier intervalle I correspond à un module composé des données de rang "rᵢ" d'un premier des sous-ensembles qui regroupent les données reçues au cours d'un premier intervalle "I", la zone de recherche explorée au cours de l'étape confirmative suivante est le module composé des données de rang "rᵢ" du premier des sous-ensembles qui regroupent les données reçues au cours de l'intervalle "I" qui suit.

Au cours d'une étape confirmative le dispositif de recherche 1 détermine s'il existe un groupe identique à l'élément de référence qui a une position dans la zone de recherche prise en compte qui corresponde à celle occupée par un groupe identique dans la zone de recherche précédemment examinée avec succès.

Dans l'exemple de réalisation envisagé, au cours d'une phase confirmative, seules sont prises en compte les positions des groupes que le dispositif de recherche 1 retrouve d'une étape de recherche à l'autre, ce qui conduit à ce que rapidement seule subsiste la position du vrai groupe caractéristique volontairement transmis avec la périodicité requise. Ceci est symbolisé par les disparitions des positions 2 et 3 des trames référencées 3 et 4, seule subsistant le groupe caractéristique placé en position 1 des différentes trames 1 à 5 présentées en figure.

Lorsque le groupement recherché est un motif FAW d'alignement de trame dont un bit est isolément transmis au cours d'une trame "T" suivant celle au cours de laquelle sont transmis les sept autres bits qui constituent l'élément de référence recherché, il est prévu de vérifier la présence en position convenable du bit transmis isolé au moyen d'une recherche complémentaire menée au cours de l'intervalle de temps "I" suivant celui où la position du groupe correspondant à l'élément de référence que constituent les sept autres bits a elle-même été déterminée par le fait qu'elle subsiste seule dans la zone, c'est-à-dire le module, où elle était recherchée, après une recherche initiale et au moins une recherche confirmative. La position mémorisée pour ce groupe est alors prise en compte en tant que position réelle de référence et dans le cas du dispositif de recherche proposé en figure 1, elle est signalée en tant que telle à la logique de commande 6 du terminal comportant ce dispositif.

## Revendications

1. Procédé de recherche d'un groupement de données numériques périodiquement inséré dans un flot transmis au rythme d'une horloge, ce procédé étant **caractérisé en ce qu'**il comporte les étapes suivantes:
- stockage modulaire et temporaire d'un volume de données successivement reçues correspondant à un sous-ensemble minimal dans lequel existe nécessairement au moins une partie caractéristique du groupement recherché;
- recherche initiale, par comparaison, d'un élément de référence correspondant au moins à ladite partie caractéristique de groupement, dans un des modules spécifiquement sélectionné en tant que zone de recherche privilégiée du sous-ensemble stocké et poursuite de la recherche, module après module dans le sous-ensemble, jusqu'au repérage d'au moins un groupe de données identique à l'élément de référence dans un des modules de ce sous-ensemble stocké;
- mémorisation de la position de tout groupe de données trouvé identique à l'élément de référence dans le premier module du sous-ensemble stocké où au moins un tel groupe a été repéré;
- recherche comparative, confirmative de la persistance d'un groupe de données identique à l'élément de référence d'un sous-ensemble au suivant, pour toute position de groupe mémorisée d'un module, dans le module de même rang du sous-ensemble stocké suivant;
- maintien de la mémorisation de position pour toute position de groupe mise en mémoire qui est identiquement retrouvée dans le module de même rang du sous-ensemble suivant;
- choix, en tant que position réelle de référence de groupement, de la position du groupe, identique à l'élément de référence, qui reste seule mémorisée dans un module d'un sous-ensemble stocké.

2. Procédé de recherche selon la revendication 1, pour flot composé de données successivement transmises au cours de trames élémentaires de période "t" par l'intermédiaire d'au moins un canal de transmission dans lequel le groupement est inséré avec une périodicité "T" multiple de "t" dans un même des sous-canaux composant un canal de transmission, **caractérisé en ce qu'**il comporte un stockage temporaire d'un volume de données successivement reçues pour un canal de transmission au cours d'une même période de durée "T" et des étapes de recherche portant chacune sur les données reçues avec un même rang au cours des trames élémentaires de période "t" successives pendant la période de durée "T" considérée.

3. Procédé de recherche selon au moins la revendication 2, pour groupement composé de données qui ont même rang temporel au cours de trames élémentaires successives de période "t" et qui sont réparties sur au moins deux périodes "T" dont la première contient les données d'une partie caractéristique du groupement, **caractérisé en ce qu'**il comporte une étape de recherche complémentaire, après confirmation d'une position restant seule mémorisée dans un module d'un sous-ensemble, pour vérifier la présence en position prévue, dans la trame "T" suivant celle ou ladite position restant seule a été déterminée, de la partie du groupement correspondant jusqu'alors non repérée, avant l'étape de signalisation de la position du groupement, comme position réelle de référence.

4. Dispositif de recherche pour la mise en oeuvre du procédé selon au moins la revendication 1, disposant de moyens (7) de mémorisation de sous-ensemble permettant le stockage temporaire par modules d'un volume de données successivement reçues correspondant au volume minimal dans lequel existe nécessairement au moins un élément de référence d'un groupement, de moyens (8) de comparaison pour détecter tout groupe de données identique à l'élément de référence, des moyens (10) de détermination de la position de tout groupe trouvé identique à l'élément de référence dans un module de sous-ensemble, **caractérisé en ce qu'**il comporte des moyens (11) de mémorisation pour enregistrer la position de tout groupe trouvé identique à l'élément de référence dans un module, ces moyens de mémorisation de position coopérant avec les moyens précédemment cités pour que soit vérifiée la persistance de la présence d'un groupe identique à l'élément de référence en même position, dans au moins le sous-ensemble stocké suivant un premier sous-ensemble temporairement stocké, et pour signaler, comme position réelle de référence, la position du groupe, identique à l'élément de référence, qui reste seule mémorisée pour un module, suite à une recherche initiale effectuée pour un sous-ensemble et au moins une recherche confirmative réalisée pour le sous-ensemble suivant.

## Patentansprüche

1. Verfahren zum Suchen einer Gruppe von digitalen Daten, die periodisch in einen im Rhythmus eines Taktes übertragenen Datenstrom eingefügt sind, **gekennzeichnet durch** die folgenden Schritte:
- modulares zeitweiliges Speichern eines Volumens von nacheinander empfangenen Daten, das einer minimalen Untermenge entspricht, in der notwendigerweise wenigstens ein charakteristischer Teil der gesuchten Gruppe existiert;
- anfängliches Suchen, durch Vergleichen, eines Referenzelements, das wenigstens dem charakteristischen Teil der Gruppe entspricht, in einem der Module, das speziell als bevorzugte Suchzone der gespeicherten Untermenge ausgewählt ist, und modulweise Fortsetzung der Suche in der Untermenge bis zur Erkennung wenigstens einer Gruppe von Daten, die mit dem Referenzelement identisch ist, in einem der Module dieser gespeicherten Untermenge;
- Speichern der Position jeder gefundenen, mit dem Referenzelement identischen Gruppe von Daten in dem ersten Modul der gespeicherten Untermenge, wo wenigstens eine solche Gruppe erkannt worden ist;
- vergleichende Suche zur Bestätigung des Fortbestehens einer mit dem Referenzelement identischen Gruppe von Daten von einer Untermenge zur nächsten für jede gespeicherte Gruppenposition eines Moduls in dem Modul von gleichem Rang der nächsten gespeicherten Untermenge;
- Beibehalten der Speicherung der Position für jede gespeicherte Gruppenposition, die in dem Modul von gleichem Rang der nächsten Untermenge wiedergefunden wird;
- Auswählen, als tatsächliche Gruppenreferenzposition, der Position der mit dem Referenzelement identischen Gruppe, die in einem Modul einer gespeicherten Untermenge allein gespeichert bleibt.

2. Verfahren nach Anspruch 1 für einen Datenstrom, der aus Daten zusammengesetzt ist, die nacheinander im Laufe von Elementarrahmen mit Periode "t" über wenigstens einen Übertragungskanal übertragen werden, in dem die Gruppe mit einer Periodizität "T", die ein Vielfaches von "t" ist, in einem der einen Übertragungskanal bildenden Unterkanäle eingefügt ist, **dadurch gekennzeichnet, dass** es eine zeitweilige Speicherung eines Volumens von nacheinander für einen Übertragungskanal im Laufe einer gleichen Periode der Dauer "T" empfangenen Daten und Suchschritte umfasst, die sich jeweils auf die Daten erstrecken, die mit einem gleichen Rang im Laufe der aufeinanderfolgenden Elementarrahmen mit Periode "t" während der betrachteten Periode "T" empfangen worden sind.

3. Suchverfahren nach wenigstens dem Anspruch 2 für eine Gruppe, die aus Daten aufgebaut ist, die gleichen zeitlichen Rang im Laufe von aufeinanderfolgenden Elementarrahmen der Periode "t" haben und auf wenigstens zwei Perioden "T" verteilt sind, von denen die erste die Daten eines charakteristischen Teils der Gruppe enthält, **dadurch gekennzeichnet, dass** es einen ergänzenden Suchschritt nach Bestätigung einer allein gespeichert gebliebenen Position in einem Modul einer Untermenge umfasst, um in dem Rahmen "T", der auf denjenigen folgt, wo die allein übrig bleibende Position bestimmt worden ist, das Vorhandensein des entsprechenden, bisher nicht gesuchten Teils der Gruppe an der vorgesehenen Position zu bestätigen, vor dem Schritt des Signalisierens der Position der Gruppe als tatsächliche Referenzposition.

4. Suchvorrichtung für die Durchführung des Verfahrens nach wenigstens dem Anspruch 1, mit Mitteln (7) zum Speichern einer Untermenge, die das zeitweilige modulweise Speichern eines Volumens von nacheinander empfangenen Daten erlaubt, das dem minimalen Volumen entspricht, in dem notwendigerweise wenigstens ein Referenzelement einer Gruppe existiert, Vergleichsmitteln (8) zum Erfassen jeder mit dem Referenzelement identischen Gruppe von Daten, Mitteln (10) zum Bestimmen der Position jeder gefundenen, mit dem Referenzelement identischen Gruppe von Daten in einem Modul der Untermenge, **dadurch gekennzeichnet, dass** sie Speichermittel (11) zum Aufzeichnen der Position jeder in einem Modul gefundenen, mit dem Referenzelement identischen Gruppe umfasst, wobei diese Positionsspeichermittel mit den vorgenannten Mitteln zusammenwirken, um das Fortbestehen des Vorhandenseins einer mit dem Referenzelement identischen Gruppe an der gleichen Position in wenigstens der auf eine erste zeitweilig gespeicherte Untermenge folgenden gespeicherten Untermenge zu überprüfen und als tatsächliche Referenzposition die Position der mit dem Referenzelement identischen Gruppe zu signalisieren, die für ein Modul nach einer anfangs für eine Untermenge durchgeführten Suche und wenigstens einer für die nachfolgende Untermenge durchgeführten bestätigenden Suche allein gespeichert bleibt.

## Claims

1. A method of searching for a digital data group inserted periodically into a data stream transmitted at a given clock rate, said method being **characterized in that** it includes the following steps:
- temporary modular storage of a volume of data successively received corresponding to the minimal subset necessarily containing at least one characteristic part of the group looked for;
- initial searching, by comparison, for a reference element corresponding at least to said characteristic group part in one module specifically selected as a preferred search area of the stored subset and continued searching, module by module in the subset, until identification of at least one data group identical to the reference element in one of the modules of said stored subset;
- memorizing the position of any data group found identical to the reference element in the first module of the stored subset in which at least one such group has been identified;
- confirmation searching, by comparison, of the persistence of a data group identical to the reference element of a subset in the next one, for all memorized group positions of a module in the module of the next stored subset having the same numerical position;
- maintained memorizing for all memorized group positions found identically in the module of the next subset having the same numerical position;
- choosing, as the actual reference position for the group, of the position of the group identical to the reference element which alone remains memorized in a module of a stored subset.

2. A search method according to claim 1 for a data stream comprising data transmitted successively in subframes of period "t", by at least one transmission channel into which the group is inserted with a period "T" which is a multiple of "t" in a same one of the subchannels constituting a transmission channel, **characterized in that** it includes temporary storage of a volume of data successively received for a transmission channel during the same period of duration "T" and search steps each applying to data received with the same numerical position during successive subframes of period "t" during the period "T" considered.

3. A search method according to at least claim 2 for a group comprising data with the same numerical position in successive subframes of period "t" divided over at least two periods "T" of which the first contains the data from a characteristic part of the group, **characterized in that** it includes a complementary search step, after confirmation that only one position remains memorized in a module of a subset, to verify the presence at the expected position in the frame "T" following that in which said single remaining position was determined of the part of the corresponding group not so far identified, before the step of signalling the position of the group as the actual reference position.

4. A search device for implementing the method according to at least claim 1 having subset memorizing means (7) for temporarily storing modules of a volume of data successively received corresponding to the minimal volume necessarily containing at least one reference element of a group, comparator means (8) for detecting any data group identical to the reference element, means (10) for determining the position of any group found identical to the reference element in a subset module, **characterized in that** it includes memorizing means (11) for recording the position of any group found identical to the reference element in a module, said position memorizing means cooperating with the previously mentioned means to verify the persistent presence of a group identical to the reference element in the same position in at least the stored subset following a first subset temporarily stored, and for memorizing, as the actual reference position, the position of the group identical to the reference element which is the only one remaining in memory for a module following an initial search of one subset and at least one confirmation search of the next subset.
